(19) Europäisches Patentamt / European Patent Office / Office européen des brevets

(11) EP 2 963 075 B1

(12) **EUROPEAN PATENT SPECIFICATION**

(45) Date of publication and mention of the grant of the patent:
**12.12.2018 Bulletin 2018/50**

(21) Application number: **14756701.0**

(22) Date of filing: **21.02.2014**

(51) Int Cl.:
***C08G 64/02*** (2006.01) ***C08L 69/00*** (2006.01)

(86) International application number:
**PCT/JP2014/054985**

(87) International publication number:
**WO 2014/133114 (04.09.2014 Gazette 2014/36)**

# (54) POLYCARBONATE MOLDED ARTICLE

POLYCARBONATFORMARTIKEL

OBJET MOULÉ EN POLYCARBONATE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.02.2013 JP 2013035919**
**26.02.2013 JP 2013035920**
**01.03.2013 JP 2013040646**

(43) Date of publication of application:
**06.01.2016 Bulletin 2016/01**

(73) Proprietor: **Teijin Limited**
**Osaka-shi, Osaka 541-0054 (JP)**

(72) Inventors:
- **IMAZATO, Kenta**
  **Matsuyama-shi**
  **Ehime 791-8041 (JP)**
- **TAKEDA, Tsuyoshi**
  **Matsuyama-shi**
  **Ehime 791-8041 (JP)**
- **OKAMOTO, Hiroshi**
  **Matsuyama-shi**
  **Ehime 791-8041 (JP)**
- **MOTOYOSHI, Tetsuya**
  **Matsuyama-shi**
  **Ehime 791-8041 (JP)**
- **TANI, Takushi**
  **Matsuyama-shi**
  **Ehime 791-8041 (JP)**
- **YAMANAKA, Katsuhiro**
  **Matsuyama-shi**
  **Ehime 791-8041 (JP)**

(74) Representative: **Beckmann, Claus**
**Kraus & Weisert**
**Patentanwälte PartGmbB**
**Thomas-Wimmer-Ring 15**
**80539 München (DE)**

(56) References cited:
**EP-A1- 1 640 400**
**EP-A1- 2 511 339**
**EP-A1- 2 840 102**
**WO-A1-2012/008344**
**WO-A1-2013/157661**
**JP-A- 2009 063 976**
**JP-A- 2009 102 536**
**JP-A- 2009 144 014**
**US-A1- 2011 003 101**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 963 075 B1

## Description

### TECHNICAL FIELD

The present invention relates to a spectacle lens which is formed from a polycarbonate.

### BACKGROUND ART

Since polycarbonates have excellent mechanical properties and optical properties, their application for molded articles such as resin windows, lamp lenses for vehicles and plastic lenses is now under study. Typical examples of the polycarbonates include polycarbonates obtained from bisphenol A.

However, due to concerns about the depletion of oil resources and an increasing amount of carbon dioxide in the air causing global warming, a great deal of attention is now paid to biomass resources whose raw materials do not depend on oil and which materialize "carbon neutral" without increasing the amount of carbon dioxide even when they are burnt. Use of isosorbide which is a biomass resource as a raw material for polycarbonates is now under study (Patent Document 1).

As a proposal for using a polycarbonate in a resin window, Patent Document 2 discloses that a polycarbonate obtained from bisphenol A is used in a resin window. However, this resin window is inferior in weather resistance. Patent Document 3 proposes use of a polycarbonate obtained from isosorbide in a resin window. However, this polycarbonate has a high water absorption coefficient and poor low-temperature impact properties, all of which must be improved.

As proposals for using a polycarbonate in a lamp lens for vehicles, Patent Document 4 and Patent Document 5 teach that a polycarbonate obtained by copolymerizing isosorbide with an aliphatic diol is used in a lamp lens for vehicles. However, since 1,4-cyclohexanedimethanol is used as the aliphatic diol, this polycarbonate has low physical properties at a low temperature, for example, low impact strength, whereby its use in cold districts is limited. Further, as it has a high water absorption coefficient, a dimensional change or warp occurs in its molded article by water absorption.

While polycarbonates obtained from isosorbide have been studied, they do not have good balance among characteristic properties such as heat resistance, surface hardness, low water absorption, low-temperature properties and weather resistance, all of which are required for resin windows and lamp lenses for vehicles.

Meanwhile, polycarbonates obtained from bisphenol A are widely used as materials for plastic lenses. However, as these polycarbonates have a high refractive index of 1.585 but a small Abbe' s number of 30, they tend to have a chromatic aberration problem and bad balance between refractive index and Abbe's number. Further, they have a large photoelastic constant, resulting in the large birefringence of molded articles thereof disadvantageously.

To overcome the above defects of the polycarbonates, a copolycarbonate of a bisphenol and an aliphatic diol is proposed (Patent Document 6). However, since this polycarbonate has a low refractive index, a small Abbe's number and a large photoelastic constant, it provides a molded article having large birefringence. Further, it is unsatisfactory in terms of moldability, heat resistance and color, thereby making it impossible to obtain a satisfactory molded article.

A polycarbonate containing isosorbide is proposed as a material for plastic lenses which satisfies the above requirements and has a sufficiently high refractive index, a large Abbe's number and a small photoelastic constant as well as excellent physical properties and solvent resistance (Patent Documents 7, 8 and 9). However, it is hardly said that this polycarbonate has impact resistance high enough to be used in the field in which safety is required. Its impact strength at a low temperature is not investigated.

Further, as plastic lenses are lightweight and have excellent characteristic properties such as fashionability and impact resistance, they are rapidly spreading to the field of optical materials, especially spectacle lenses. Problems such as low surface hardness and surface reflection which have been considered as the defects of plastic materials have been significantly improved by the development of surface modification technology in which a silicone-based hard coat film is formed and an antireflection film obtained by vapor depositing an inorganic material on the surface of a lens is formed, whereby the market of plastic lenses is expanding due to high-value addition to lenses.

However, when a silicone-based hard coat or an inorganic antireflection film is formed, there occurs a problem that impact resistance inherent in a plastic lens sharply degrades. It is known that when, for example, allyl diglycol carbonate which is a generally-purpose thermosetting plastic lens material is used as a material, the impact resistance (in a falling ball test in which a steel ball having a predetermined weight is dropped from a height of 127 cm on the center of a lens having a center thickness of 2 mm) of a substrate itself is about 200 g but drops to about 60 g in the case of the formation of a hard coat on the substrate and to 10 g in the case of the formation of an antireflection film on the hard coat. To avoid this problem, in the case of a thermosetting plastic lens, there is disclosed a method for improving impact resistance by forming a primer layer between a plastic lens substrate and a silicone-based hard coat. It is disclosed that a spectacle lens having impact resistance and passing the U.S. FDA standard (falling ball impact value of 16.4 g) even after inorganic antireflection coating is obtained, for example, by a method for forming a urethane-based resin layer as the primer layer (Patent Document 10). However, for use in fields in which high safety is required, such as education

and engineering, a plastic lens must pass ANSI Z87.1 standard (falling ball impact value of 68 g).

EP 2 840 102 A1 describes a copolycarbonate having a low water absorption coefficient and excellent heat resistance, low temperature characteristics and surface hardness. The copolycarbonate (Z) contains a unit (A) represented by the following formula and a unit (B) represented by the following formula (B) as main recurring units, the ($A/B_{n=1}$) molar ratio of the unit (A) and the unit ($B_{n=1}$) being 40/60 to 99/1. The unit ($B_{n=1}$) is a single unit constituting a block. ($R^1$ is an alkylene group or cycloalkylene group, all of which may be substituted by an aromatic group having 6 to 12 carbon atoms. $R^2$ is an alkylene group, cycloalkylene group or arylene group, all of which may be substituted by an aromatic group having 6 to 12 carbon atoms. "r" and "s" are each independently an integer of 0 to 4. "1" is 0 or 1. "m" is 0 or 1. "n" is an integer of 1 to 100.)

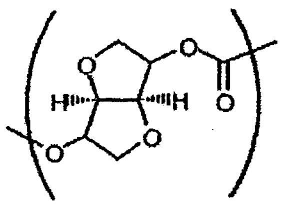

(A)

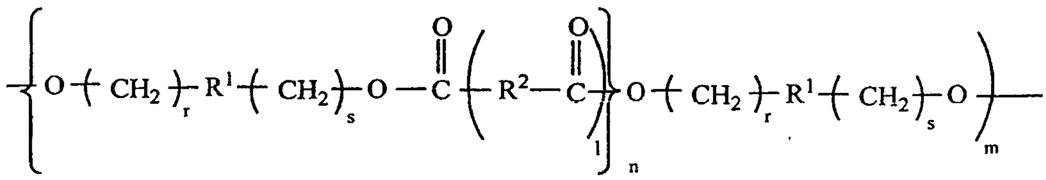

(B)

US 2011/003101 A1 describes processes for producing a polycarbonate containing a plant-derived starting material and to molded articles thereof, the polycarbonate having excellent mechanical strength, heat resistance, a low refractive index, a large Abbe number, low birefringence, and excellent transparency. The document relates to a process for producing a polycarbonate which includes a step in which one or more dihydroxy compounds including a dihydroxy compound having at least one linking group $-CH_2-O-$ in the molecule thereof are reacted with a carbonic acid diester in the presence of a polymerization catalyst, wherein the dihydroxy compound having at least one linking group $-CH_2-O-$ in the molecule thereof has a formic acid content lower than 20 ppm. The document further relates to a molded article constituted of a polycarbonate or a composition of the polycarbonate, the polycarbonate being a polycarbonate which contains constituent units derived from a dihydroxy compound having at least one linking group $-CH_2-O-$ in the molecule thereof and has an Abbe number of 50 or larger and a 5% weight loss temperature of 340 °C or higher.

EP 2 511 339 A1 relates to the problem to provide a polycarbonate resin composition excellent in weather resistance, transparency, hue, heat resistance, thermal stability, moldability, and mechanical strength, and a molded article obtained therefrom. The document describes to a polycarbonate resin composition (X) which includes a polycarbonate resin (A) and an aromatic polycarbonate resin (B), the polycarbonate resin (A) including a constitutional unit derived from a dihydroxy compound (a) having, as part of the structure thereof, a site represented by the following formula (1) and a constitutional unit derived from a dihydroxy compound (b) of an aliphatic hydrocarbon, wherein the proportion of the constitutional unit derived from the dihydroxy compound (b) of an aliphatic hydrocarbon based on all constitutional units each derived from a dihydroxy compound in the polycarbonate resin (A) is 45% by mole or more. (The case where the site represented by the formula (1) is part of $-CH_2-O-H$ is omitted.)

$$\{CH_2\text{-}O\} \qquad (1)$$

EP 1 640 400 A1 describes a polycarbonate containing an ether diol residue producible from a polysaccharide and expressed by the following formula (1), and a diol residue expressed by the following formula (2) (here, m is an integer of 2 to 12), wherein said ether diol residue amounts to 65-98 wt.% of all the diol residues, and having a glass transition temperature of 90°C or higher.

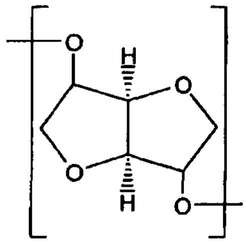

(1)

$$-O-(C_mH_{2m})-O- \quad (2)$$

Prior Art Documents

| | |
|---|---|
| (Patent Document 1) | WO2004/111106 |
| (Patent Document 2) | JP-A 2003-311908 |
| (Patent Document 3) | JP-A 2009-61762 |
| (Patent Document 4) | JP-A 2009-144014 |
| (Patent Document 5) | JP-A 2012-41471 |
| (Patent Document 6) | JP-A 2003-090901 |
| (Patent Document 7) | JP-A 2009-62501 |
| (Patent Document 8) | JP-A 2009-63976 |
| (Patent Document 9) | JP-A 2010-190919 |
| (Patent Document 10) | JP-A 08-54501 |

DISCLOSURE OF THE INVENTION

It is an object of the present invention to provide a plastic lens used as a spectacle lens having good balance among heat resistance, cold resistance, transparency, impact strength, scratch resistance and optical properties. The inventors of the present invention found that a polycarbonate containing a unit derived from isosorbide has good balance among heat resistance, cold resistance, transparency, impact strength, scratch resistance and optical properties and accomplished the present invention.

That is, the present invention is a spectacle lens, which is also referred to herein as "plastic lens", which is formed from a polycarbonate containing (i) a carbonate unit (A) represented by the following formula and having (ii) a specific viscosity measured with a 20°C methylene chloride solution of 0.3 to 0.8, (iii) a glass transition temperature of 100°C or higher, (iv) a pencil hardness of at least HB and (v) a total light transmittance of 80 % or more and which (vi) does not crack with a falling ball having a weight of at least 68 g in a falling ball test based on ANSI Z87.1 standard at 25°C and (vii) has an in-plane phase difference of 50 nm or less at a thickness of 2.0 mm.

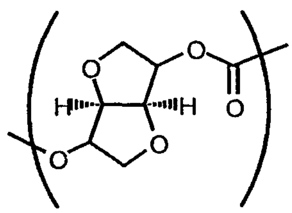

(A)

BEST MODE FOR CARRYING OUT THE INVENTION

The present invention will be described in detail hereinbelow.

<plastic lens>

An object of the present invention is to provide a spectacle lens (herein also referred to as "plastic lens") which is excellent in balance among heat resistance, cold resistance, transparency, impact strength, scratch resistance and optical properties. The inventors of the present invention conducted intensive studies and found that a polycarbonate

composition comprising isosorbide is excellent in balance among heat resistance, cold resistance, transparency, impact strength, scratch resistance and optical properties. The present invention was accomplished based on this finding.

The plastic lens of the present invention is excellent in balance among heat resistance, cold resistance, transparency, impact strength, scratch resistance and optical properties. The plastic lens of the present invention is useful as a spectacle lens or sunglass lens which needs to cut off a specific wavelength.

The present invention is a spectacle lens which is formed from a polycarbonate containing (i) a carbonate unit (A) represented by the following formula and having (ii) a specific viscosity measured with a 20°C methylene chloride solution of 0.3 to 0.8, (iii) a glass transition temperature of 100°C or higher, (iv) a pencil hardness of at least HB and (v) a total light transmittance of 80 % or more and which (vi) does not crack with a falling ball having a weight of at least 68 g in a falling ball test based on ANSI Z87.1 standard at 25°C, and (vii) has an in-plane phase difference of 50 nm or less at a thickness of 2.0 mm.

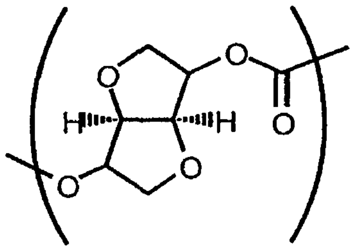

(A)

(polycarbonate)

The polycarbonate used in the present invention contains the unit (A) represented by the above formula. The unit (A) is contained in an amount of preferably 15 mol% or more, more preferably 30 mol% or more, much more preferably 50 mol% or more based on the total of all the carbonate units.

(unit (A))

The unit (A) in the present invention is derived from an aliphatic diol having an ether group as shown in the above formula (A).

The above formula (A) shows a diol having an ether bond which is a material having high heat resistance and high pencil hardness among biomass resources.

Examples of the above formula (A) include units (A1), (A2) and (A3) which are represented by the following formulae and stereoisomeric to one another.

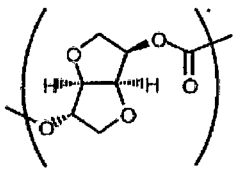

(A 1)

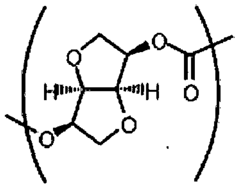

(A 2)

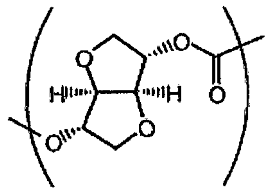

(A 3)

They are sugar-derived ether diols, obtained from the biomass of the natural world and called "renewable resources". The units (A1), (A2) and (A3) are called isosorbide, isommanide and isoidide, respectively. Isosorbide is obtained by hydrogenating D-glucose obtained from starch and dehydrating the obtained product. The other ether diols are obtained from a similar reaction except for the starting material.

The recurring unit derived from isosorbide (1,4:3,6-dianhydro-D-sorbitol) out of isosorbide, isomannide and isoidide is particularly preferred because it is easily produced and has excellent heat resistance.

(unit (b))

The polycarbonate contains the unit (A) and a carbonate unit (b) derived from at least one compound selected from the group consisting of an aliphatic diol compound and an alicyclic diol compound, and the (A/b) molar ratio of the unit (A) to the unit (b) is preferably 15/85 to 95/5.

When the (A/b) molar ratio of the unit (A) to the unit (b) is 15/85 to 95/5, heat resistance becomes high and moldability becomes satisfactory. The (A/b) molar ratio of the unit (A) to the unit (b) is preferably 30/70 to 95/5, more preferably 40/60 to 95/5, particularly preferably 50/50 to 95/5, most preferably 60/40 to 95/5. When the (A/b) molar ratio is lower than 15/85, heat resistance tends to degrade and when the (A/b) molar ratio is higher than 95/5, melt viscosity becomes high, thereby deteriorating moldability, whereby impact resistance tends to become worse. The molar ratio of each recurring unit is calculated by measurement with the proton NMR of JNM-AL400 of JEOL Ltd.

The total content of the unit (A) and the unit (b) of the polycarbonate is preferably 70 mol% or more, more preferably 80 mol% or more, much more preferably 90 mol% or more, particularly preferably 95 mol% or more, most preferably 100 mol% based on the total of all the carbonate units.

The unit (b) is a carbonate unit (b) derived from at least one compound selected from the group consisting of an aliphatic diol compound and an alicyclic diol compound. The aliphatic diol compound may be either a linear aliphatic diol compound or a branched aliphatic diol compound.

As the linear aliphatic diol compound, a linear aliphatic diol compound having preferably 2 to 30 carbon atoms, more preferably 3 to 20 carbon atoms, much more preferably 3 to 10 carbon atoms is used. Examples of the linear aliphatic diol compound include ethylene glycol, 1,3-propanediol, 1,4-butanediol, 1,5-pentanediol, neopentyl glycol, 1,6-hexanediol, 1,7-heptanediol, 1,8-octanediol, 1,9-nonanediol, 2-ethyl-1,6-hexanediol, 2,2,4-trimethyl-1,6-hexanediol, 1,10-decanediol, 1,12-dodecanediol, hydrogenated dilinoleyl glycol and hydrogenated dioleyl glycol. Out of these, 1,3-propanediol, 1,4-butanediol, 1,6-hexanediol, 1,9-nonanediol, 1,10-decanediol and 1,12-dodecanediol are preferred.

As the branched aliphatic diol compound, a branched aliphatic diol compound having preferably 3 to 30 carbon atoms, more preferably 3 to 20 carbon atoms, much more preferably 4 to 12 carbon atoms is used. Examples of the branched aliphatic diol compound include 1,3-butylene glycol, 2-methyl-1,3-propanediol, neopentyl glycol, 3-methyl-1,5-pentanediol, 2-n-butyl-2-ethyl-1,3-propanediol, 2,2-diethyl-1,3-propanediol, 2,4-diethyl-1,5-pentanediol, 1,2-hexane glycol, 1,2-octyl glycol, 2-ethyl-1,3-hexanediol, 2,3-diisobutyl-1,3-propanediol, 2,2-diisoamyl-1,3-propanediol and 2-methyl-2-propyl-1,3-propanediol. Out of these, 3-methyl-1,5-pentanediol, 2-n-butyl-2-ethyl-1,3-propanediol, 2,2-diethyl-1,3-propanediol and 2,4-diethyl-1,5-pentanediol are preferred.

As the alicyclic diol compound, an alicyclic diol compound having preferably 6 to 30 carbon atoms, more preferably 6 to 20 carbon atoms is used. Examples of the alicyclic diol compound include cyclohexanediols such as 1,2-cyclohexanediol, 1,3-cyclohexanediol, 1,4-cyclohexanediol and 2-methyl-1,4-cyclohexanediol; cyclohexanedimethanols such as 1,2-cyclohexanedimethanol, 1,3-cyclohexanedimethanol and 1,4-cyclohexanedimethanol; norbornanedimethanols such as 2,3-norbornanedimethanol and 2,5-norbornanedimethanol; and tricyclodecanedimethanol, pentacyclopentadecanedimethanol, 1,3-adamantanediol, 2,2-adamantanediol, decalindimethanol, 2,2,4,4-tetramethyl-1,3-cyclobutanediol and 3,9-bis(2-hydroxy-1,1-dimethylethyl)-2,4,8,10-tetraoxaspiro[5.5]undecane. Out of these, 1,4-cyclohexanedimethanol, tricyclodecanedimethanol and 3,9-bis(2-hydroxy-1,1-dimethylethyl)-2,4,8,10-tetraoxaspiro[5.5]undecane are preferred.

These aliphatic diol compounds and these alicyclic diol compounds may be used alone or in combination of two or more. As the diol used in the present invention, an aromatic diol may be used as long as the effect of the present invention is not impaired. Examples of the aromatic dihydroxy compound include $\alpha,\alpha'$-bis(4-hydroxyphenyl)-m-diisopropylbenzene (bisphenol M), 9,9-bis(4-hydroxy-3-methylphenyl)fluorene, 1,1-bis(4-hydroxyphenyl)cyclohexane, 1,1-bis(4-hydroxyphenyl)-3,3,5-trimethylcyclohexane, 4,4'-dihydroxy-3,3'-dimethyldiphenyl sulfide, bisphenol A, 2,2-bis(4-hydroxy-3-methylphenyl)propane (bisphenol C), 2,2-bis(4-hydroxyphenyl)-1,1,1,3,3,3-hexafluoropropane (bisphenol AF) and 1,1-bis(4-hydroxyphenyl)decane.

A preferred example of the polycarbonate is a copolycarbonate which contains the above unit (A) and a unit (b-1) represented by the following formula (b-1) and has a total content of the unit (A) and the unit (b-1) of 80 mol% or more, preferably 90 mol% or more based on the total of all the recurring units.

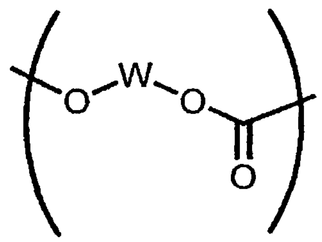

(b − 1)

In the above formula, W is an alkylene group having 8 to 12 carbon atoms. Examples of the alkylene group having 8 to 12 carbon atoms include octylene group, nonylene group, decylene group and dodecylene group.

The unit (b-1) is derived from an aliphatic diol having 8 to 12 carbon atoms. Examples of the aliphatic diol having 8 to 12 carbon atoms include 1,8-octanediol, 1,9-nonanediol, 1,10-decanediol, 1,12-dodecanediol, 2,4-diethyl-1,5-pentanediol and 2-methyl-1,8-octanediol. Out of these, 1,8-octanediol, 1,9-nonanediol, 1,10-decanediol and 1,12-dodecanediol are preferred, and 1,9-nonanediol, 1,10-decanediol and 1,12-dodecanediol are more preferred. They may be used in combination of two or more.

The (A/(b-1)) molar ratio of the unit (A) to the unit (b-1) is preferably 60/40 to 95/5, more preferably 70/30 to 95/5, much more preferably 80/20 to 95/5, particularly preferably 90/10 to 95/5. Within the above range, balance among heat resistance, cold resistance, transparency, impact strength, scratch resistance and optical properties becomes excellent advantageously. The (A/(B -1)) molar ratio can be calculated by measurement with the proton NMR of JNM-AL400 of JEOL Ltd.

(specific viscosity: $\eta_{sp}$)

The specific viscosity ($\eta_{sp}$) of the polycarbonate is preferably 0.3 to 0.8, more preferably 0.32 to 0.6, much more preferably 0.33 to 0.50, particularly preferably 0.34 to 0.45, most preferably 0.34 to 0.4. When the specific viscosity is 0.3 to 0.8, strength and moldability become high. When the specific viscosity of the polycarbonate of the present invention is lower than 0.3, strength degrades and when the specific viscosity is higher than 0.8, moldability deteriorates disadvantageously.

The specific viscosity is obtained from a solution prepared by dissolving 0.7 g of the polycarbonate in 100 ml of methylene chloride at 20°C by using an Ostwald viscometer.

$$\text{Specific viscosity } (\eta_{sp}) = (t - t_0)/t_0$$

["$t_0$" is the number of seconds required for the dropping of methylene chloride, and "t" is the number of seconds required for the dropping of a sample solution]

The measurement of the specific viscosity may be carried out, for example, by the following procedure. The polycarbonate is first dissolved in methylene chloride in an amount which is 20 to 30 times the weight of the polycarbonate, soluble matter is collected by cerite filtration, the solution is removed, and the residue is fully dried to obtain a methylene chloride-soluble solid. The specific viscosity at 20°C is obtained from a solution prepared by dissolving 0.7 g of the solid in 100 ml of methylene chloride by using an Ostwald viscometer.

(glass transition temperature: Tg)

The glass transition temperature (Tg) of the polycarbonate is preferably 100 to 150°C, more preferably 105 to 140°C, much more preferably 120 to 140°C. When the glass transition temperature (Tg) is 120 to 130°C, heat resistance stability and moldability become satisfactory at the time of using the polycarbonate as an optical molded article advantageously.

When the glass transition temperature (Tg) of the polycarbonate is lower than 100°C, the heat resistance of a

molded article tends to become unsatisfactory. When the glass transition temperature of the polycarbonate of the present invention is higher than 150°C, injection moldability tends to deteriorate. The glass transition temperature (Tg) is measured at a temperature elevation rate of 20°C/min by using the 2910 DSC of TA Instruments Japan.

(total light transmittance)

A molded article having a thickness of 2.0 mm formed by injection molding the polycarbonate has a total light transmittance of 80 % or more, preferably 85 % or more, more preferably 88 % or more, much more preferably 88.5 % or more, particularly preferably 89 % or more. The upper limit of the total light transmittance is preferably 95 %, more preferably 94 %, much more preferably 93 %. A 2.0 mm-thick molded article of the resin composition used in the present invention preferably has a haze of 0.3 to 20 %. The haze is more preferably 0.3 to 10 %, much more preferably 0.5 to 10 %, particularly preferably 0.6 to 5 %, most preferably 0.7 to 3 %.

The term "total light transmittance" used in association with the present invention indicates the level of transparency and means the ratio of transmitted light to incident light measured by the method E308 of ASTM-D1003-61. The term "haze" used in association with the present invention indicates the level of transparency and means the percentage (%) of transmitted light deviated from an incident light flux by forward scattering when it passes through a test specimen (ASTM-D1003-61). That is, as the total light transmittance becomes higher and the haze becomes lower, transparency becomes higher.

(photoelastic coefficient)

The absolute value of photoelastic coefficient of the polycarbonate is preferably 30 x $10^{-12}$ $Pa^{-1}$ or less, more preferably 28 x $10^{-12}$ $Pa^{-1}$ or less, particularly preferably 20 x $10^{-12}$ $Pa^{-1}$ or less. When the absolute value is 30 x $10^{-12}$ $Pa^{-1}$ or less, optical strain is hardly produced by stress, whereby the obtained lens is preferred as an optical lens.

(pencil hardness)

The polycarbonate has a pencil hardness of at least HB, preferably at least F. The pencil hardness is more preferably at least H since scratch resistance becomes excellent. The pencil hardness can be enhanced by increasing the content of the recurring unit (B) based on the total of all the recurring units. In the present invention, the term "pencil hardness" means hardness that when a resin is rubbed with a pencil having specific pencil hardness, no scratch mark is left, and pencil hardness used in the surface hardness test of a film which can be measured in accordance with JIS K-5600 is used as an index. The pencil hardness becomes lower in the order of 9H, 8H, 7H, 6H, 5H, 4H, 3H, 2H, H, F, HB, B, 2B, 3B, 4B, 5B and 6B, 9H is the hardest, and 6B is the softest.

(production method of polycarbonate)

The polycarbonate is produced by reaction means known per se for producing an ordinary polycarbonate, for example, a method in which a diol component is reacted with a carbonate precursor such as diester carbonate. A brief description is subsequently given of basic means for these production methods.

A transesterification reaction using a diester carbonate as the carbonate precursor is carried out by stirring an aromatic dihydroxy component and the diester carbonate in a predetermined ratio under heating in an inert gas atmosphere and distilling off the formed alcohol or phenol. The reaction temperature which differs according to the boiling point of the formed alcohol or phenol is generally 120 to 300°C. The reaction is completed while the formed alcohol or phenol is distilled off by setting a reduced pressure from the beginning. An end sealing agent and an antioxidant may be added as required.

The diester carbonate used in the above transesterification reaction is an ester such as an aryl group or aralkyl group having 6 to 12 carbon atoms which may be substituted. Specific examples thereof include diphenyl carbonate, ditolyl carbonate, bis(chlorophenyl)carbonate and m-cresyl carbonate. Out of these, diphenyl carbonate is particularly preferred. The amount of diphenyl carbonate is preferably 0.97 to 1.10 moles, more preferably 1.00 to 1.06 moles based on 1 mole of the total of the dihydroxy compounds.

To increase the polymerization rate in the melt polymerization method, a polymerization catalyst may be used, as exemplified by an alkali metal compound, an alkali earth metal compound, a nitrogen-containing compound and a metal compound.

As the above compounds, organic acid salts, inorganic salts, oxides, hydroxides, hydrides, alkoxides and quaternary ammonium hydroxides of an alkali metal or an alkali earth metal are preferably used, and these compounds may be used alone or in combination.

Examples of the alkali metal compound include sodium hydroxide, potassium hydroxide, cesium hydroxide,

lithium hydroxide, sodium hydrogen carbonate, sodium carbonate, potassium carbonate, cesium carbonate, lithium carbonate, sodium acetate, potassium acetate, cesium acetate, lithium acetate, sodium stearate, potassium stearate, cesium stearate, lithium stearate, sodium borohydride, sodium benzoate, potassium benzoate, cesium benzoate, lithium benzoate, disodium hydrogen phosphate, dipotassium hydrogen phosphate, dilithium hydrogen phosphate, disodium phenylphosphate, disodium salts, dipotassium salts, dicesium salts and dilithium salts of bisphenol A, and sodium salts, potassium salts, cesium salts and lithium salts of phenol.

Examples of the alkali earth metal compound include magnesium hydroxide, calcium hydroxide, strontium hydroxide, barium hydroxide, magnesium carbonate, calcium carbonate, strontium carbonate, barium carbonate, calcium hydrogen carbonate, barium hydrogen carbonate, magnesium hydrogen carbonate, strontium hydrogen carbonate, magnesium diacetate, calcium diacetate, strontium diacetate and barium diacetate. Examples of the basic boron compound include sodium salts, potassium salts, lithium salts, calcium salts, barium salts, magnesium salts and strontium salts of tetramethylboron, tetraethylboron, tetrapropylboron, tetrabutylboron, trimethylethylboron, trimethylbenzylboron, trimethylphenylboron, triethylmethylboron, triethylbenzylboron, triethylphenylboron, tributylbenzylboron, tributylphenylboron, tetraphenylboron, benzyl triphenylboron, methyl triphenylboron and butyl triphenylboron.

Examples of the basic phosphorus compound include triethylphosphine, tri-n-propylphosphine, triisopropylphosphine, tri-n-butylphosphine, triphenylphosphine, tributylphosphine and quaternary phosphonium salts.

Examples of the nitrogen-containing compound include quaternary ammonium hydroxides having an alkyl or aryl group such as tetramethylammonium hydroxide, tetraethylammonium hydroxide, tetrapropylammonium hydroxide, tetrabutylammonium hydroxide and trimethylbenzylammonium hydroxide. Tertiary amines such as triethylamine, dimethylbenzylamine and triphenylamine, and imidazoles such as 2-methylimidazole, 2-phenylimidazole and benzimidazole may be used. Bases and basic salts such as ammonia, tetramethylammonium borohydride, tetrabutylammonium borohydride, tetrabutylammonium tetraphenylborate and tetraphenylammonium tetraphenylborate may also be used.

Examples of the metal compound include zinc aluminum compounds, germanium compounds, organic tin compounds, antimony compounds, manganese compounds, titanium compounds and zirconium compounds. These compounds may be used alone or in combination of two or more.

The amount of the polymerization catalyst is preferably $1 \times 10^{-9}$ to $1 \times 10^{-2}$ equivalent, more preferably $1 \times 10^{-8}$ to $1 \times 10^{-5}$ equivalent, much more preferably $1 \times 10^{-7}$ to $1 \times 10^{-3}$ equivalent based on 1 mole of the diol component.

A catalyst deactivator may be added in the latter stage of the reaction. Known catalyst deactivators are used effectively as the catalyst deactivator. Out of these, ammonium salts and phosphonium salts of sulfonic acid are preferred. Salts of dodecylbenzenesulfonic acid such as tetrabutylphosphonium salts of dodecylbenzenesulfonic acid and salts of paratoluenesulfonic acid such as tetrabutylammonium salts of paratoluenesulfonic acid are more preferred.

As the ester of sulfonic acid, methyl benzenesulfonate, ethyl benzenesulfonate, butyl benzenesulfonate, octyl benzenesulfonate, phenyl benzenesulfonate, methyl paratoluenesulfonate, ethyl paratoluenesulfonate, butyl paratoluenesulfonate, octyl paratoluenesulfonate and phenyl paratoluenesulfonate are preferably used. Out of these, tetrabutylphosphonium salts of dodecylbenzenesulfonic acid are most preferably used.

As for the amount of the catalyst deactivator, when at least one polymerization catalyst selected from alkali metal compounds and/or alkali earth metal compounds is used, the catalyst deactivator is used in an amount of preferably 0.5 to 50 moles, more preferably 0.5 to 10 moles, much more preferably 0.8 to 5 moles based on 1 mole of the catalyst. The polycarbonate may be mixed with additives such as a heat stabilizer, plasticizer, optical stabilizer, polymerization metal inactivating agent, flame retardant, lubricant, antistatic agent, surfactant, antibacterial agent, ultraviolet absorbent and release agent as required according to purpose.

(heat stabilizer)

The polycarbonate preferably contains a heat stabilizer to suppress the reduction of molecular weight and the deterioration of color during extrusion/molding. Since the ether diol residue of the unit (A) tends to be deteriorated by heat and oxygen to be colored, a phosphorus-based stabilizer is preferably contained as the heat stabilizer. As the phosphorus-based stabilizer, a pentaerythritol type phosphite compound or a phosphite compound which reacts with a dihydric phenol and has a cyclic structure is more preferably used.

Examples of the above pentaerythritol type phosphite compound include distearyl pentaerythritol diphosphite, bis(2,4-di-tert-butylphenyl)pentaerythritol diphosphite, bis(2,6-di-tert-butyl-4-methylphenyl)pentaerythritol diphosphite, bis(2,6-di-tert-butyl-4-ethylphenyl)pentaerythritol diphosphite, phenyl bisphenol A pentaerythritol diphosphite, bis(nonylphenyl)pentaerythritol diphosphite and dicyclohexyl pentaerythritol diphosphite. Out of these, distearyl pentaerythritol diphosphite and bis(2,4-di-tert-butylphenyl)pentaerythritol diphosphite are preferred.

Examples of the phosphite compound which reacts with a dihydric phenol and has a cyclic structure include 2,2'-methylenebis(4,6-di-tert-butylphenyl) (2,4-di-tert-b utylphenyl)phosphite, 2,2'-methylenebis(4,6-di-tert-butylphenyl) (2-tert-butyl-4-methylphenyl)phosphite, 2,2'-methylenebis(4-methyl-6-tert-butylphenyl) (2-tert-bu tyl-4-methylphenyl)phosphite, 2,2'-ethylidenebis(4-methyl-6-tert-butylphenyl) (2-tert-b utyl-4-methylphenyl)phosphite, 2,2'-methylenebis(4,6-di-t-butylphenyl)octyl phosphite and 6-tert-butyl-4-[3-[(2,4,8,10)-tetra-tert-butyldibenzo[d, f] [1,3,2]dioxaphosphepin-6-yl]oxy]propyl]-2-methylphenol

The other phosphorus-based stabilizers include phosphite compounds other than the above compounds, phosphonite compounds and phosphate compounds.

The phosphite compounds include triphenyl phosphite, tris(nonylphenyl)phosphite, tridecyl phosphite, trioctyl phosphite, trioctadecyl phosphite, didecylmonophenyl phosphite, dioctylmonophenyl phosphite, diisopropylmonophenyl phosphite, monobutyldiphenyl phosphite, monodecyldiphenyl phosphite, monooctyldiphenyl phosphite, 2,2-methylenebis(4,6-di-tert-butylphenyl)octyl phosphite, tris(diethylphenyl)phosphite, tris(di-iso-propylphenyl)phosphite, tris(di-n-butylphenyl)phosphite, tris(2,4-di-tert-butylphenyl)phosphite and tris(2,6-di-tert-butylphenyl)phosphite.

The phosphate compounds include tributyl phosphate, trimethyl phosphate, tricresyl phosphate, triphenyl phosphate, trichlorophenyl phosphate, triethyl phosphate, diphenylcresyl phosphate, diphenylmonoorthoxenyl phosphate, tributoxyethyl phosphate, dibutyl phosphate, dioctyl phosphate and diisopropyl phosphate. Triphenyl phosphate and trimethyl phosphate are preferred.

The phosphonite compounds include tetrakis(2,4-di-tert-butylphenyl)-4,4'-biphenylene diphosphonite, tetrakis(2,4-di-tert-butylphenyl)-4,3'-biphenylene diphosphonite, tetrakis(2,4-di-tert-butylphenyl)-3,3'-biphenylene diphosphonite, tetrakis(2,6-di-tert-butylphenyl)-4,4'-biphenylene diphosphonite, tetrakis(2,6-di-tert-butylphenyl)-4,3'-biphenylene diphosphonite, tetrakis(2,6-di-tert-butylphenyl)-3,3'-biphenylene diphosphonite, bis(2,4-di-tert-butylphenyl)-4-phenyl-phenyl phosphonite, bis(2,4-di-tert-butylphenyl)-3-phenyl-phenyl phosphonite, bis(2,6-di-n-butylphenyl)-3-phenyl-phenyl phosphonite, bis(2,6-di-tert-butylphenyl)-4-phenyl-phenyl phosphonite and bis(2,6-di-tert-butylphenyl)-3-phenyl-phenyl phosphonite. Tetrakis(di-tert-butylphenyl)-biphenylene diphosphonites and bis(di-tert-butylphenyl)-phenylphenyl phosphonites are preferred, and tetrakis(2,4-di-tert-butylphenyl)-biphenylene diphosphonites and bis(2,4-di-tert-butylphenyl)-phenyl-phenyl phosphonites are more preferred. The phosphonite compound may be and is preferably used in combination with the above phosphite compound having an aryl group substituted by two or more alkyl groups.

The phosphonate compounds include dimethyl benzene phosphonate, diethyl benzene phosphonate and dipropyl benzene phosphonate.

The above phosphorus-based stabilizers may be used alone or in combination of two or more, and at least a pentaerythritol type phosphite compound or a phosphite compound having a cyclic structure is preferably used in an effective amount. The phosphorus-based stabilizer is used in an amount of preferably 0.001 to 1 part by weight, more preferably 0.01 to 0.5 part by weight, much more preferably 0.01 to 0.3 part by weight based on 100 parts by weight of the polycarbonate.

A hindered phenol-based heat stabilizer may be added as a heat stabilizer to the polycarbonate in combination with the phosphorus-based heat stabilizer so as to suppress the reduction of molecular weight and the deterioration of color during extrusion/molding.

The hindered phenol-based stabilizer is not particularly limited if it has an antioxidant function. Examples of the hindered phenol-based stabilizer include n-octadecyl-3-(4'-hydroxy-3',5'-di-t-butylphenyl) propionate, tetrakis{methylene-3-(3',5'-di-t-butyl-4-hydroxyphenyl)p ropionate}methane, distearyl(4-hydroxy-3-methyl-5-t-butylbenzyl)malonate, triethylene glycol-bis{3-(3-t-butyl-5-methyl-4-hydroxyphenyl)propionate}, 1,6-hexanediol-bis{3-(3,5-di-t-butyl-4-hydroxyphenyl)pro pionate}, pentaerythrityl-tetrakis{3-(3,5-di-t-butyl-4-hydroxyphen yl)propionate}, 2,2-thiodiethylenebis{3-(3,5-di-t-butyl-4-hydroxyphenyl) propionate}, 2,2-thiobis(4-methyl-6-t-butylphenol), 1,3,5-trimethyl-2,4,6-tris(3,5-di-t-butyl-4-hydroxybenzy l)benzene, tris(3,5-di-t-butyl-4-hydroxybenzyl)-isocyanurate, 2,4-bis{(octylthio)methyl}-o-cresol, isooctyl-3-(3,5-di-t-butyl-4-hydroxyphenyl)propionate, 2,5,7,8-tetramethyl-2(4',8',12'-trimethyltridecyl)chroma n-6-ol and 3,3',3",5,5',5"-hexa-t-butyl-a,a',a"-(mesitylene-2,4, 6-triyl)tri-p-cresol.

Out of these, n-octadecyl-3-(4'-hydroxy-3',5'-di-t-butylphenyl)propion ate, pentaerythrityl-tetrakis{3-(3,5-di-t-butyl-4-hydroxyphen yl)propionate}, 3,3',3",5,5',5"-hexa-t-butyl-a,a',a"-(mesitylene-2,4, 6-triyl)tri-p-cresol and 2,2-thiodiethylenebis{3-(3,5-di-t-butyl-4-hydroxyphenyl) propionate} are preferred.

These hindered phenol-based stabilizers may be used alone or in combination of two or more.

The hindered phenol-based stabilizer is used in an amount of preferably 0.001 to 1 part by weight, more preferably 0.01 to 0.5 part by weight, much more preferably 0.01 to 0.3 part by weight based on 100 parts by weight of the polycarbonate.

(release agent)

The polycarbonate may contain a release agent to further improve its releasability from a mold at the time of melt molding as long as the object of the present invention is not impaired.

The release agent is selected from a higher fatty acid ester of a monohydric or polyhydric alcohol, higher fatty acid, paraffin wax, beeswax, olefin-based wax, olefin-based wax containing a carboxyl group and/or a carboxylic anhydride group, silicone oil and organopolysiloxane.

The higher fatty acid ester is preferably a partial ester or full ester of a monohydric or polyhydric alcohol having

1 to 20 carbon atoms and a saturated fatty acid having 10 to 30 carbon atoms. Examples of the partial ester or full ester of a monohydric or polyhydric alcohol and a saturated fatty acid include monoglyceride stearate, diglyceride stearate, triglyceride stearate, monosorbitate stearate, stearyl stearate, monoglyceride behenate, behenyl behenate, pentaerythritol monostearate, pentaerythritol tetrastearate, pentaerythritol tetrapelargonate, propylene glycol monostearate, stearyl stearate, palmityl palmitate, butyl stearate, methyl laurate, isopropyl palmitate, biphenyl biphenate, sorbitan monostearate and 2-ethylhexyl stearate. Out of these, monoglyceride stearate, triglyceride stearate, pentaerythritol tetrastearate and behenyl behenate are preferably used.

The higher fatty acid is preferably a saturated fatty acid having 10 to 30 carbon atoms. Examples of the fatty acid include myristic acid, lauric acid, palmitic acid, stearic acid and behenic acid.
These release agents may be used alone or in combination of two or more. The amount of the release agent is preferably 0.01 to 5 parts by weight based on 100 parts by weight of the polycarbonate.

(ultraviolet absorbent)

The polycarbonate may contain an ultraviolet absorbent. The ultraviolet absorbent is selected from a benzotriazole-based ultraviolet absorbent, benzophenone-based ultraviolet absorbent, triazine-based ultraviolet absorbent, cyclic imino-ester-based ultraviolet absorbent and cyanoacrylate-based ultraviolet absorbent, out of which a benzotriazole-based ultraviolet absorbent is preferred.

Examples of the benzotriazole-based ultraviolet absorbent include 2-(2'-hydroxy-5'-methylphenyl)benzotriazole, 2-(2'-hydroxy-5'-tert-butylphenyl)benzotriazole, 2-(2'-hydroxy-5'-tert-octylphenyl)benzotriazole, 2-(2'-hydroxy-3',5'-di-tert-butylphenyl)benzotriazole, 2-(2'-hydroxy-3',5'-di-tert-amylphenyl)benzotriazole, 2-(2'-hydroxy-3'-dodecyl-5'-methylphenyl)benzotriazole, 2-(2'-hydroxy-3',5'-bis($\alpha$,$\alpha$'-dimethylbenzyl)phenyl benzotriazole, 2-[2'-hydroxy-3'-(3",4",5",6"-tetraphthalimidomethyl )-5'-methylphenyl]benzotriazole, 2-(2'-hydroxy-3'-tert-butyl-5'-methylphenyl)-5-chloroben zotriazole, 2-(2'-hydroxy-3',5'-di-tert-butylphenyl)-5-chlorobenzotr iazole, 2,2'-methylenebis[4-(1,1,3,3-tetramethylbutyl)-6-(2H-ben zotriazol-2-yl)phenol] and condensate of methyl-3-[3-tert-butyl-5-(2H-benzotriazol-2-yl)-4-hydrox yphenylpropionate and polyethylene glycol.

The amount of the ultraviolet absorbent is preferably 0.01 to 2 parts by weight, more preferably 0.1 to 1 part by weight, much more preferably 0.2 to 0.5 part by weight based on 100 parts by weight of the polycarbonate.

(optical stabilizer)

The polycarbonate may contain an optical stabilizer. When the polycarbonate contains an optical stabilizer, it is preferred in terms of weather resistance, and a molded article thereof is hardly cracked.

Examples of the optical stabilizer include hindered amines such as 1,2,2,6,6-pentamethyl-4-piperidyl methacrylate, bis(2,2,6,6-tetramethyl-1-octyloxy-4-piperidinyl)didecan oate, bis(1,2,2,6,6-pentamethyl-4-piperidinyl)-[[3,5-bis(1,1-d imethylethyl)-4-hydroxyphenyl]methyl]butyl malonate, 2,4-bis[N-butyl-N-(1-cyclohexyloxy-2,2,6,6-tetramethylpi peridin-2-yl)amino]-6-(2-hydroxyethylamine)-1,3,5-triazi ne, bis(1,2,2,6,6-pentamethyl-4-piperidinyl)sebacate, methyl(1,2,2,6,6-pentamethyl-4-piperidnyl)sebacate, bis(2,2,6,6-tetramethyl-4-piperidyl)carbonate, bis(2,2,6,6-tetramethyl-4-piperidyl)succinate, bis(2,2,6,6-tetramethyl-4-piperidyl)sebacate, 4-benzoyloxy-2,2,6,6-tetramethylpiperidine, 4-octanoyloxy-2,2,6,6-tetramethylpiperidine, bis(2,2,6,6-tetramethyl-4-piperidyl)diphenylmethane-p,p' -dicarbamate, bis(2,2,6,6-tetramethyl-4-piperidyl)benzene-1,3-disulfon ate and bis(2,2,6,6-tetramethyl-4-piperidyl)phenylphosphite, and nickel complexes such as nickel bis(octylphenyl sulfide, nickel complex-monoethylate 3,5-di-t-butyl-4-hydroxybenzyl phosphate and nickel dibutyl dithiocarbamate. These optical stabilizers may be used alone or in combination of two or more. The amount of the optical stabilizer is preferably 0.01 to 1 part by weight, more preferably 0.05 to 0.5 part by weight based on 100 parts by weight of the polycarbonate.

(bluing agent)

The polycarbonate may contain a bluing agent to erase the yellow tint of a lens based on a polymer and an ultraviolet absorbent. A bluing agent which is used for polycarbonates may be used without any problem. In general, anthraquinone-based dyes are easily acquired and preferred.

Typical examples of the bluing agent include generic name Solvent Violet13 [CA. No (color index No) 60725], generic name Solvent Violet31 [CA. No 68210], generic name Solvent Violet33 [CA. No 60725], generic name Solvent Blue94 [CA. No 61500], generic name Solvent Violet36 [CA. No 68210], generic name Solvent Blue97 [Macrolex Violet RR] of Bayer AG] and generic name Solvent Blue45 [CA. No 61110].

These bluing agents may be used alone or in combination of two or more. The bluing agent is used in an amount of 0.1 x $10^{-4}$ to 2 x $10^{-4}$ part by weight based on 100 parts by weight of the polycarbonate.

(colorant)

The polycarbonate is mixed with a dye or pigment as a colorant in order to darken a plastic lens or correct the coloring of the above ultraviolet absorbent. Examples of the dye or pigment include perylene-based dyes, coumalin-based dyes, thioindigo-based dyes, anthraquinone-based dyes, thioxanthone-based dyes, ferrocyanides such as Prussian blue, perinone-based dyes, quinoline-based dyes, quinacridone-based dyes, dioxazine-based dyes, isoindolinone-based dyes and phthalocyanine-based dyes. Further, fluorescent whitening agents such as bisbenzoxazolyl-stilbene derivatives, bisbenzoxazolyl-naphthalene derivatives, bisbenzoxazolyl-thiophene derivatives and coumalin derivatives may also be used. By using a metallic pigment, a good metallic color is obtained and the indoor temperature can be kept properly through moderate heat reflection. The amount of the above dye or pigment is preferably 0.0001 to 1 part by weight, more preferably 0.0005 to 0.8 part by weight based on 100 parts by weight of the polycarbonate.

(production method of resin composition)

A resin composition comprising the polycarbonate and the above-described additives can be produced, for example, by premixing components and optional components, melt kneading them together and pelletizing the kneaded product. Examples of the premixing means include a Nauter mixer, a twin-cylinder mixer, a Henschel mixer, a mechanochemical device and an extrusion mixer. During premixing, the resulting mixture may be granulated by means of an extrusion granulator or a briquetting machine. After premixing, the obtained mixture is melt kneaded by means of a melt kneader typified by a vented double-screw extruder and pelletized by means of a device such as a pelletizer. Other examples of the melt kneader include a Banbury mixer, a kneading roll and a constant heat stirring vessel, and a vented double-screw extruder is preferred. Alternatively, the components and the optional components may be supplied into a melt kneader typified by a double-screw extruder independently without being premixed together. The cylinder temperature at the time of melt kneading is preferably 180 to 270°C, more preferably 190 to 260°C, much more preferably 200 to 250°C. When the cylinder temperature is higher than 270°C, the thermal decomposition of the polycarbonate is greatly promoted.

(plastic lens)

The plastic lens of the present invention can be obtained by the injection molding or injection compression molding of the above polycarbonate. It can also be formed by the vacuum molding or compression molding of the polycarbonate.

In the case of injection molding, a plastic lens molded article is obtained by injection molding the polycarbonate into a lens form by means of an injection molding machine or an injection compression molding machine. The molding is preferably carried out at a cylinder temperature of 180 to 270°C. To suppress coloring and the reduction of molecular weight caused by the decomposition of the polymer, the cylinder temperature is more preferably 180 to 270°C, much more preferably 190 to 260°C. When the cylinder temperature is higher than 270°C, the decomposition of the polymer is greatly promoted. Although the mold temperature may be 40 to 140°C, to shorten the molding cycle and the melt residence time of the resin, the mold temperature is preferably 40 to 120°C, more preferably 40 to 100°C.

The thickness of the plastic lens obtained as described above may be suitably selected according to purpose but preferably 1 to 5 mm.

The plastic lens of the present invention is advantageously used in the form of an aspherical lens as required. Since a single aspherical lens can eliminate spherical aberration substantially, it is not necessary to use a plurality of spherical lenses so as to remove spherical aberration, thereby making it possible to reduce the weight of the plastic lens and cut the production cost thereof.

(hard coat, etc.)

The plastic lens of the present invention may be subjected to a post-processing treatment such as the formation of a hard coat (cured) layer, antireflection coat layer or antifogging coat layer on the surface as required. The hard coat layer to be formed on the surface of the lens substrate of the present invention is preferably thermally curable or curable with activation energy. Examples of the thermally curable hard coating material include silicone-based resins such as organopolysiloxane and melamine-based resins.

As the silicone-based resins, resins described in JP-A 48-056230, JP-A 49-014535, JP-A 08-054501 and JP-A 08-198985 may be used.

The hard coat layer is obtained by drying and/or thermally curing a coating composition comprising a melamine resin such as methylated methylolmelamine, propylated methylolmelamine, butylated methylolmelamine or isobutylated methylolmelamine, a crosslinking agent and a curing agent.

Another component may be added to the coating composition in addition to the above components as long as the physical properties of the obtained cured film are not impaired. For example, the coating composition may contain a curing agent for promoting a reaction, a particulate inorganic material for matching the refractive indices of various substrates and a surfactant for improving wettability at the time of coating and the smoothness of a cured film.

It is also possible to color the coating film by dispersing a colorant (dye and pigment) or a filler, or by dissolving an organic polymer. Further, an ultraviolet absorbent and an antioxidant may be added.

Means for applying to the substrate (plastic lens) of the coating composition is not particularly limited, and known techniques such as dip coating, spray coating, spin coating, bar coating, flow coating and roll coating may be employed. From the viewpoint of surface accuracy, dip coating and spin coating are preferably used.

A single-layer or multi-layer antireflection layer may be formed on the above cured layer as required.

As the constituent component of the antireflection layer, a conventionally known component such as an inorganic oxide, fluoride or nitride is used. Specific examples thereof include silicon dioxide, silicon monoxide, zirconium oxide, tantalum oxide, yttrium oxide, aluminum oxide, titanium oxide, magnesium fluoride and silicon nitride. Examples of the method of forming the antireflection layer include vacuum vapor deposition, sputtering, ion plating and ion beam assisted method. Antireflection performance is improved by forming this antireflection layer. Further, the antifogging layer may be formed on the above cured layer or antireflection layer.

(phase difference of lens)

The in-plane phase difference at a wavelength of 550 nm of the plastic lens of the present invention is 50 nm or less, preferably 45 nm or less, more preferably 40 nm or less. When the in-plane phase difference exceeds 50 nm, color unevenness such as a rainbow pattern or distortion becomes worse disadvantageously.

(impact resistance)

The evaluation of impact resistance is generally carried out based on the US FDA standards in which impact resistance is evaluated according to a state when a steel ball having a weight of about 16.4 g is naturally dropped on a lens from a height of 127 cm above the lens to collide with the lens.

Further, an evaluation method in which a 68 g steel ball having a diameter of 25.4 mm is dropped on industrial safety glasses from a height of 127 cm is specified in the American National Standards (ANSI Z87.1 1989) as a standard for ensuring the safety of a wearer so as to further improve the safety of the wearer.

Since the inventors of the present invention were aimed to develop spectacle lenses having high safety and impact resistance which satisfies requirements for industrial use in order to ensure the high safety of a person wearing glasses, as a method for evaluating the impact resistance of a lens, they checked and judged the degrees of "breakage, chipping and cracking" by dropping an ANSI Z87.1-based steel ball (68 g) or a steel ball having a weight (357 g) several times larger than the weight of the above steel ball from a height of 127 cm.

It is preferred that a plastic lens should not be cracked with a falling ball having a weight of at least 357 g in a falling ball test based on ANSI Z87.1 standards at 25°C.

Further, in order to evaluate impact strength in a low-temperature environment, in addition to the test at normal temperature (25°C), a falling ball test in a -20°C environment was carried out. As a practical level of safety, it is required that a plastic lens should not crack in a 68 g falling ball test, it is preferred that a plastic lens should not crack in a 357 g falling ball test, and it is more preferred that a plastic lens should not crack in a falling ball test at -20°C as a cold resistance performance as the safety of a spectacle lens. It is preferred that a plastic lens should not crack with a falling ball having a weight of at least 357 g in a falling ball test based on ANSI Z87.1 standard at -20°C.

EXAMPLES

Examples 1 to 4, Comparative Examples 1 to 5

The following examples are provided for the purpose of further illustrating the invention which relates to a plastic lens. Evaluations were made by the following methods.

(1) Specific viscosity

The pellet was dissolved in methylene chloride to a concentration of about 0.7 g/dL so as to measure the specific viscosity of the resulting solution at 20°C with an Ostwald viscometer (name of device: RIGO AUTO VISCOSIMETER TYPE VMR-0525·PC). The specific viscosity $\eta_{sp}$ is obtained from the following equation.

$$\eta_{sp} = t/t_0 - 1$$

t: flow time of sample solution
to: flow time of solvent alone

(2) Glass transition temperature (Tg)

The pellet was measured with the DSC (model DSC2910) of TA Instruments.

(3) Photoelastic constant

A film having a width of 1 cm and a length of 6 cm was prepared, and the phase difference under no load and the phase difference of light having a wavelength of 550 nm under loads of 1N, 2N and 3N of the film were measured with the M220 spectroscopic ellipsometer of JASCO Corporation to calculate (phase difference) x (film width)/(load).

(4) Total light transmittance

After the pellet was dried at 105°C for 5 hours with hot air, it was molded into a three-stage plate having a width of 50 mm, a length of 90 mm and a thickness of 3.0 mm (length of 20 mm), 2.0 mm (length of 45 mm) and 1.0 mm (length of 25 mm) from the gate side and an arithmetic average roughness (Ra) of 0.03 μm at a molding temperature of 240°C, a mold temperature of 80 °C and a molding cycle of 50 seconds by using an injection molding machine (JSW J-75EIII of The Japan Steel Works, Ltd.).

The total light transmittance of a 2.0 mm-thick part of the three-stage plate was measured by using the Haze Meter NDH 2000 of Nippon Denshoku Industries Co., Ltd. in accordance with IS013468.

(5) Pencil hardness

The pellet was molded into a 2 mm-thick rectangular plate at a cylinder temperature of 240°C, a mold temperature of 80°C and a molding cycle of 1 minute by using the JSW J-75EIII of The Japan Steel Works, Ltd. to measure the JIS K5600-based scratch hardness (pencil method) of the molded test piece.

(6) Appearance of lens

Transmitted light and reflected light were applied to a plastic lens under a 3-wavelength type white light fluorescent lamp to visually check and judge the degree of an interference fringe and whitened state.

(7) In-plane phase difference of lens

A spectacle lens having a thickness of 2.0 mm and a diameter of 50 mm was formed by injection molding to measure its phase difference and slow axis by using the KOBRA-CCD/XY30P small-area phase difference measuring instrument of Oji Scientific Instruments.

(8) Weather resistance

After the plastic lens obtained in (7) above was exposed to a black panel temperature of 63°C and a humidity of 50 % for 1,000 hours at a cycle time of 120 minutes which consisted of 18 minutes of water spray and 102 minutes of no water spray by using a sunshine weather meter (WEL-SUN: HC-B of Suga Test Instruments Co., Ltd.), the color ($\Delta_{YI}$) and appearance crack of a 2.0 mm-thick part of the plastic lens were checked and judged.

(9) Impact strength

A spectacle lens having a thickness of 2.0 mm and a diameter of 50 mm was formed by injection molding to check the degrees of its "breakage, chipping and cracking" by dropping steel balls (68 g, 357 g) from a height of 127 cm at 25°C and -20°C in accordance with ANSI Z87.1.

Example 1

(copolycarbonate)

463.72 parts of isosorbide (to be abbreviated as ISS hereinafter), 41.24 parts of 1,9-nonanediol (to be abbreviated as ND hereinafter), 749.70 parts of diphenyl carbonate (to be abbreviated as DPC hereinafter), and $3.0 \times 10^{-2}$ part of tetramethylammonium hydroxide and $1.0 \times 10^{-4}$ part of sodium hydroxide as catalysts were heated at 170°C in a nitrogen atmosphere to be molten. After it was confirmed that they were molten, an EI reaction step was started. After the start of decompression, decompression was carried out for 70 minutes to ensure that the final degree of vacuum became 13.4 kPa, and that degree of vacuum was maintained after 13. 4 kPa was reached. At the same as the start of decompression, the temperature was raised at a rate of 10°C/hr until the final polymer temperature became 190°C. After the final polymer temperature reached 190°C, a vacuum degree of 13.4 kPa and a polymer temperature of 190°C were maintained for 10 minutes until 80 % of the theoretical amount of phenol was distilled off.

After it was confirmed that 80 % of phenol was distilled off, a PA reaction step (pre-step) was started. The temperature was raised at a rate of 0.5°C/hr until the final polymer temperature became 220°C. Decompression was carried out for 60 minutes to ensure that the final degree of vacuum became 3 kPa along with the elevation of temperature.

Subsequently, the PA reaction step (post-step) was started. In the post-step, the temperature was raised at a rate of 1°C/min to ensure that the final polymer temperature became 240°C. Decompression was carried out for 20 minutes to ensure that the final degree of vacuum became 134 Pa along with the elevation of temperature. When a predetermined agitation power value was reached, the reaction was terminated, a tetrabutyl phosphonium salt of dodecylbenzenesulfonic acid was added in an amount 2 times larger than the total molar amount of the catalysts to deactivate the catalysts, nitrogen was discharged from the bottom of a reaction tank under increased pressure, and the obtained product was cut with a pelletizer to obtain a pellet while it was cooled in a water tank.

(resin composition)

The obtained pellet, 2-(3-tert-butyl-5-methyl-2-hydroxyphenyl)-5-chloro-2H-be nzotriazole which is a benzotriazole type ultraviolet absorbent as an ultraviolet absorbent, ADK STAB LA-77Y (of ADEKA Corporation) which is a secondary amine compound as an optical stabilizer and Irgafos 168 (manufactured by BASF; tris(2,6-di-tert-butylphenyl)phosphite) which is a phosphorus-based stabilizer as an antioxidant were uniformly mixed together, and the resulting mixture was injected into an extruder to obtain the resin composition shown in Table I. A vented double-screw extruder having a diameter of 30 mm (TEX30α-35BW-3V of The Nippon Steel Works, Ltd.) was used as the extruder. As extrusion conditions, the discharge rate was set to 30 to 40 kg/hr, the screw revolution was set to 250 rpm, the vacuum degree of the vent was set to 3 kPa and the extrusion temperature from the first feed port to the dice part was set to 230°C to obtain a pellet.

(spectacle lens)

After the obtained pellet was dried at 105°C for 12 hours, its physical properties were evaluated. Further, the obtained copolycarbonate pellet was injection compression molded at a cylinder temperature of 220 to 240°C and a mold temperature of 70 to 100°C by using a mold for spectacle lenses to produce a spectacle lens. This lens had high transparency and good appearance. The results obtained by carrying out falling ball tests on this lens are shown in Table I.

Example 2

The melt polymerization of the copolycarbonate was carried out in the same manner as in Example 1 except that 446.18 parts of ISS and 60.49 parts of ND were used, and the polymer after the reaction was pelletized. The obtained pellet and the components shown in Table I were uniformly mixed together, the resulting mixture was injected into an extruder to produce the resin composition shown in Table I, and the composition was injection compression molded to produce a spectacle lens in the same manner as in Example 1. This lens had high transparency and good appearance. The results obtained by carrying out falling ball tests on this lens are shown in Table I.

Example 3

The melt polymerization of the copolycarbonate was carried out in the same manner as in Example 1 except that 350.93 parts of ISS and 148.44 parts of cyclohexanedimethanol (to be abbreviated as CHDM hereinafter) were used, and the polymer after the reaction was pelletized. The obtained pellet and the components shown in Table I were uniformly mixed together, the resulting mixture was injected into an extruder to produce the resin composition shown in

Table I, and the composition was injection compression molded to produce a spectacle lens in the same manner as in Example 1. This lens had high transparency and good appearance. The results obtained by carrying out falling ball tests on this lens are shown in Table I.

Example 4

The melt polymerization of the copolycarbonate was carried out in the same manner as in Example 1, and the polymer after the reaction was pelletized. The obtained pellet was uniformly mixed with Irgafos 168 as an antioxidant, and the obtained resin composition was injection compression molded to obtain a spectacle lens. The results obtained by carrying out falling ball tests on this lens are shown in Table I.

It is understood that the polycarbonate lens produced in Example 4 is inferior in weather resistance to the coplycarbonate lenses produced in Examples 1 to 3 but equivalent in other properties.

Comparative Example 1

The melt polymerization of the copolycarbonate was carried out in the same manner as in Example 1 except that 426.13 parts of ISS and 60.84 parts of 1,6-hexanediol (to be abbreviated as HD hereinafter) were used, and the polymer after the reaction was pelletized. The obtained pellet and the components shown in Table I were uniformly mixed together, the resulting mixture was injected into an extruder to produce the resin composition shown in Table I, and the composition was injection compression molded to produce a spectacle lens in the same manner as in Example 1. The results obtained by carrying out falling ball tests on this lens are shown in Table I.

Comparative Example 2

The melt polymerization of the copolycarbonate was carried out in the same manner as in Example 1 except that 340.90 parts of ISS and 250.68 parts of bisphenol A (to be abbreviated as BPA hereinafter) were used, and the polymer after the reaction was pelletized. The obtained pellet and the components shown in Table I were uniformly mixed together, the resulting mixture was injected into an extruder to produce the resin composition shown in Table I, and the composition was injection compression molded to produce a spectacle lens in the same manner as in Example 1. The results obtained by carrying out falling ball tests on this lens are shown in Table I.

Comparative Example 3

The melt polymerization of the copolycarbonate was carried out in the same manner as in Example 1 except that 501.32 parts of ISS and 749.70 parts of diphenyl carbonate were used, and the polymer after the reaction was pelletized. The obtained pellet and the components shown in Table I were uniformly mixed together, the resulting mixture was injected into an extruder to produce the resin composition shown in Table I, and the composition was injection compression molded to produce a spectacle lens in the same manner as in Example 1. The results obtained by carrying out falling ball tests on this lens are shown in Table I.

It is understood that the polycarbonate lenses produced in Comparative Examples 1 to 3 are inferior in impact strength to the polycarbonate lenses produced in Examples 1 to 3. It is also understood that they have bad balance among lens properties, for example, one having high lens birefringence, one having low weather resistance and one having low surface hardness.

Comparative Example 4

A spectacle lens was produced in the same manner as in Example 1 by using the Panlite (registered trademark) AD5503 (pellet) of Teijin Chemicals Ltd. which is a bisphenol A (BPA) polycarbonate. The results obtained by carrying out falling ball tests on this lens are shown in Table I.

It is understood that the polycarbonate lens produced in Comparative Example 4 is inferior in lens properties such as a high photoelastic constant and low weather resistance to the copolycarbonate lenses produced in Examples 1 to 3. It is also understood that it is inferior in surface hardness as well.

Comparative Example 5

Evaluation results obtained by using polyacrylic resin (Acrypet MF of Mitsubishi Rayon Co., Ltd.) are shown in Table I.

It is understood that the polyacrylic resin lens produced in Comparative Example 5 is inferior in impact strength

to the copolycarbonate lenses produced in Examples 1 to 3.

Table I

| | substrate | ISS/ND Example 1 | ISS/ND Example 2 | ISS/CHDM Example 3 | ISS/ND Example 4 |
|---|---|---|---|---|---|
| Isosorbide | mol% | 92.5 | 89 | 70 | 92.5 |
| Diol | mol% | (ND) 7.5 | (ND) 11 | (CHDM) 30 | (ND) 7.5 |
| Ultraviolet absorbent | Part by weight | 0.4 | 0.4 | 0.4 | - |
| Optical stabilizer | Part by weight | 0.1 | 0.1 | 0.1 | - |
| Phosphorus-based heat stabilizer | Part by weight | 0.1 | 0.1 | 0.1 | 0.1 |
| Specific viscosity | | 0.34 | 0.34 | 0.38 | 0.34 |
| Glass transition temperature | °C | 135 | 121 | 120 | 135 |
| Total light transmittance | % | 91 | 91 | 92 | 91 |
| Photoelastic constant | $\times 10^{-12} Pa^{-1}$ | 16 | 15 | 20 | 16 |
| Pencil hardness | - | H | H | F | H |

| | substrate | ISS/ND Example 1 | ISS/ND Example 2 | ISS/CHDM Example 3 | ISS/ND Example 4 |
|---|---|---|---|---|---|
| Lens appearance | degree of interference fringe | very low | very low | very low | very low |
| Phase difference of lens | nm | 35 | 34 | 38 | 35 |
| Weather resistance of lens | SWOM1000h$\Delta$YI | 1 | 1 | 1 | cracked |
| Impact properties at indoor temperature (25°C) | falling ball test from 1.27 m (68g) | no breakage | no breakage | no breakage | no breakage |
| Impact properties at indoor temperature (25°C) | falling ball test from 1.27 m (357g) | no breakage | no breakage | no breakage | no breakage |
| Low-temperature impact properties (-20°C) | falling ball test from 1.27 m (357g) | no breakage | no breakage | cracked | no breakage |

| | substrate | ISS/HD | ISS/BPA | ISS homo | PC | PMMA |
|---|---|---|---|---|---|---|
| | | C.Ex. 1 | C.Ex. 2 | C.Ex. 3 | C.Ex. 4 | C.Ex. 5 |
| Isosorbide | mol% | 85 | 68 | 100 | 0 | - |
| Diol | mol% | (HD) 15 | (BPA) 32 | 0 | (BPA) 100 | - |
| Ultraviolet absorbent | Part by weight | 0.4 | 0.4 | 0.4 | - | - |
| Optical stabilizer | Part by weight | 0.1 | 0.1 | 0.1 | - | - |
| Phosphorus-based heat stabilizer | Part by weight | 0.1 | 0.1 | 0.1 | 0.1 | - |
| Specific viscosity | | 0.25 | 0.27 | 0.26 | 0.28 | - |
| Glass transition temperature | °C | 125 | 152 | 163 | 143 | 93 |
| Total light transmittance | % | 92 | 91 | 92 | 89 | 92 |
| Photoelastic constant | $\times 10^{-12} Pa^{-1}$ | 18 | 38 | 15 | 90 | -3 |
| Pencil hardness | - | HB | B | H | 4B | 2H |

| | substrate | ISS/HD | ISS/BPA | ISS homo | PC | PMMA |
|---|---|---|---|---|---|---|
| | | C.Ex. 1 | C.Ex. 2 | C.Ex. 3 | C.Ex. 4 | C.Ex. 5 |
| Lens appearance | degree of interference fringe | very low | very low | very low | remarkable | very low |
| Phase difference of lens | nm | 30 | 48 | 33 | 80 | 3 |
| Weather resistance of lens | SWOM1000h⊿YI | 1 | 10 | 1 | 12 | 0 |
| Impact properties at indoor temperature (25°C) | falling ball test from 1.27 m (68g) | cracked | chipped | chipped | no breakage | breakage |
| Impact properties at indoor temperature (25°C) | falling ball test from 1.27 m (357g) | breakage | breakage | breakage | no breakage | breakage |
| Low-temperature impact properties (-20°C) | falling ball test from 1.27 m (357g) | breakage | breakage | breakage | no breakage | breakage |

C.Ex.: Comparative Example

## Effect of the Invention

The plastic lens of the present invention is excellent in balance among heat resistance, cold resistance, transparency, impact strength, scratch resistance and optical properties.

## Claims

1. A spectacle lens which is formed from a polycarbonate containing (i) a carbonate unit (A) represented by the following formula and having (ii) a specific viscosity measured with a 20°C methylene chloride solution of 0.3 to 0.8, (iii) a glass transition temperature of 100°C or higher, (iv) a pencil hardness of at least HB and (v) a total light transmittance of 80 % or more and wherein the lens (vi) does not crack with a falling ball having a weight of at least 68 g in a falling ball test based on ANSI Z87.1 standard at 25°C and (vii) has an in-plane phase difference of 50 nm or less at a thickness of 2.0 mm;

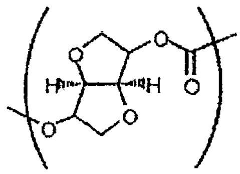

(A)

wherein
the specific viscosity ($\eta_{sp}$) is obtained from a solution prepared by dissolving 0.7 g of the polycarbonate in 100 ml of methylene chloride at 20° by using an Ostwald viscometer and calculated as $(t - t_0)/t_0$, where "$t_0$" is the number of seconds required for the dropping of methylene chloride, and "t" is the number of seconds required for the dropping of a sample solution,
the glass transition temperature is measured at a temperature elevation rate of 20°C/min by using a DSC thermal analyzing system,
the pencil hardness is measured by the JIS K5600 base map plate test method on a molded test piece where the molded test piece is prepared by molding a polycarbonate pellet into a 2 mm-thick rectangular plate at a cylinder temperature of 240°C, a mold temperature of 80°C and a molding cycle of 1 minute by using an injection molding machine,
the total light transmission means the ratio of transmitted light to incident light measured by the method E308 of ASTM-D1003-61 on a molded three-stage plate having a thickness of 2.0 mm formed by injection molding the polycarbonate by using a Haze Meter in accordance with ISO13468,
the in-plane phase difference is measured at a wavelength of 550 nm with a small-area phase difference measuring instrument.

2. The spectacle lens according to claim 1, wherein the polycarbonate contains a carbonate unit (A) represented by the above formula and a carbonate unit (B-2) derived from at least one compound selected from the group consisting of an aliphatic diol compound and an alicyclic diol compound and has a (A/(B-2)) molar ratio of the unit (A) to the unit (B-2) of 15/85 to 95/5.

3. The spectacle lens according to claim 1, wherein the polycarbonate has a glass transition temperature of 120 to 140°C.

4. The spectacle lens according to claim 1, wherein the polycarbonate has a photoelastic coefficient absolute value of $30 \times 10^{-12}$ $Pa^{-1}$ or less; wherein
the photoelastic coefficient is determined by measuring the phase difference under no load and the phase difference of light having a wavelength of 550 nm under loads of 1N, 2N and 3N of a film having a width of 1 cm and a length of 6 cm with a spectroscopic ellipsometer to calculate (phase difference) x (film width)/(load).

5. The spectacle lens according to claim 1 which does not crack with a falling ball having a weight of at least 357 g in a falling ball test based on ANSI Z87.1 standard at 25°C.

6. The spectacle lens according to claim 1 which does not crack with a falling ball having a weight of at least 357 g in a falling ball test based on ANSI Z87.1 standard at -20°C.

## Patentansprüche

1. Brillenlinse, die gebildet ist aus einem Polycarbonat, enthaltend (i) eine Carbonateinheit (A) der folgenden Formel mit (ii) einer spezifischen Viskosität, gemessen mit einer Methylenchloridlösung bei 20°C, von 0,3 bis 0,8, (iii) einer Glasübergangstemperatur von 100°C oder höher, (iv) einer Bleistifthärte von mindestens HB und (v) einer Gesamtlichtdurchlässigkeit von 80% oder mehr, und wobei die Linse (vi) nicht bricht bei einer fallenden Kugel mit einem Gewicht von mindestens 68 g in einem Fallkugeltest, basierend auf dem ANSI-Z87.1-Standard, bei 25°C und (vii) eine Phasendifferenz in der Bezugsebene von 50 nm oder weniger bei einer Dicke von 2,0 mm hat;

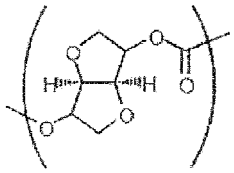

(A)

wobei gilt:

die spezifische Viskosität ($\eta_{sp}$) wird erhalten anhand einer Lösung, die hergestellt ist durch Auflösen von 0,7 g des Polycarbonats in 100 ml Methylenchlorid bei 20°C, unter Verwendung eines Ostwald-Viskosimeters und berechnet wird als $(t - t_0)/t_0$, wobei gilt: "$t_0$" ist die Anzahl der Sekunden, die benötig wird für das Tropfen des Methylenchlorids, und "t" ist die Anzahl der Sekunden, die benötigt wird für das Tropfen der Probenlösung,

die Glasübergangstemperatur wird gemessen bei einer Temperaturzunahmegeschwindigkeit von 20°C/min unter Verwendung eines DSC-Thermoanalysesystems,

die Bleistifthärte wird gemessen nach dem JIS-K5600-Grundbildplattentestverfahren an einem geformten Probenkörper, wobei der geformte Probenkörper hergestellt wird durch Formen eines Polycarbonatpellets zu einer 2 mm dicken rechteckigen Platte bei einer Zylindertemperatur von 240°C, einer Formungstemperatur von 80°C und einer Formungszeit von 1 Minute unter Verwendung einer Spritzgussmaschine,

die Gesamtlichtdurchlässigkeit bedeutet das Verhältnis des transmittierten Lichts zu dem eintreffenden Licht, gemessen nach dem Verfahren E308 gemäß ASTM-D1003-61 an einer geformten Dreistufenplatte mit einer Dicke von 2,0 mm, gebildet durch Spritzgießen des Polycarbonats, unter Verwendung eines Trübungsmessgeräts gemäß ISO13468,

die Phasendifferenz in der Bezugsebene wird gemessen bei einer Wellenlänge von 550 nm mit einem Kleinfeldphasendifferenzmessgerät.

**2.** Brillenlinse nach Anspruch 1, wobei das Polycarbonat enthält: eine Carbonateinheit (A) der obigen Formel und eine Carbonateinheit (B-2), abgeleitet von mindestens einer Verbindung, ausgewählt aus der Gruppe, bestehend aus einer aliphatischen Diolverbindung und einer alicyclischen Diolverbindung, mit einem (A/(B-2)) Molverhältnis der Einheit (A) zu der Einheit (B-2) von 15/85 bis 95/5.

**3.** Brillenlinse nach Anspruch 1, wobei das Polycarbonat eine Glasübergangstemperatur von 120 bis 140°C aufweist.

**4.** Brillenlinse nach Anspruch 1, wobei das Polycarbonat einen Absolutwert des photoelastischen Koeffizienten von $30 \times 10^{-12}\ Pa^{-1}$ oder weniger aufweist; wobei gilt:

der photoelastische Koeffizient wird bestimmt durch Messen der Phasendifferenz ohne Last und der Phasendifferenz von Licht mit einer Wellenlänge von 550 nm unter Lasten von 1N, 2N und 3N bei einem Film mit einer Breite von 1 cm und einer Länge von 6 cm, und zwar mit einem spektroskopischen Ellipsometer, um (Phasendifferenz) x (Fimbreite)/(Last) zu berechnen.

**5.** Brillenlinse nach Anspruch 1, die nicht bricht bei einer Fallkugel mit einem Gewicht von mindestens 357 g in einem Fallkugeltest basierend auf dem ANSI-Z87.1-Standard bei 25°C.

**6.** Brillenlinse nach Anspruch 1, die nicht bricht bei einer Fallkugel mit einem Gewicht von mindestens 357 g in einem Fallkugeltest basierend auf dem ANSI-Z87.1-Standard bei -20°C.

## Revendications

**1.** Verre de lunettes qui est formé à partir d'un polycarbonate contenant (i) un motif carbonate (A) représenté par la formule suivante et ayant (ii) une viscosité spécifique mesurée avec une solution de chlorure de méthylène à 20 °C de 0,3 à 0,8, (iii) une température de transition vitreuse de 100 °C ou plus, (iv) une dureté au crayon d'au moins HB et (v) une transmittance de lumière totale de 80 % ou plus et dans lequel le verre (vi) ne se fissure pas avec une bille tombante ayant un poids d'au moins 68 g dans un test à la bille tombante basé sur la norme ANSI Z87.1 à 25 °C et (vii) présente un déphasage dans le plan de 50 nm ou moins à une épaisseur de 2,0 mm ;

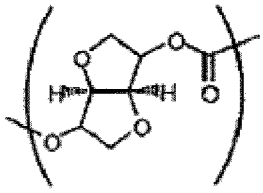

(A)

dans lequel
la viscosité spécifique ($\eta_{sp}$) est obtenue à partir d'une solution préparée par la dissolution de 0,7 g du polycarbonate dans 100 ml de chlorure de méthylène à 20 ° par l'utilisation d'un viscosimètre Ostwald et calculée sous la forme $(t - t_0)/t_0$, où « $t_0$ » est le nombre de secondes nécessaires pour la chute du chlorure de méthylène, et « t » est le nombre de secondes nécessaires pour la chute d'une solution d'échantillon,
la température de transition vitreuse est mesurée à une vitesse d'élévation de température de 20 °C/min par l'utilisation d'un système d'analyse thermique DSC,
la dureté au crayon est mesurée par le procédé de test de la plaque de carte de base de JIS K5600 sur une pièce de test moulée où la pièce de test moulée est préparée par le moulage d'un pellet de polycarbonate en une plaque rectangulaire de 2 mm d'épaisseur à une température de cylindre de 240 °C, une température de moule de 80 °C et un cycle de moulage de 1 minute par l'utilisation d'une machine de moulage par injection,
la transmission de lumière totale signifie le rapport de la lumière transmise sur la lumière incidente mesuré par le procédé E308 de l'ASTM-D1003-61 sur une plaque triétage moulée ayant une épaisseur de 2,0 mm formée par le moulage par injection du polycarbonate par l'utilisation d'un brillancemètre Haze conformément à l'ISOI3468,
le déphasage dans le plan est mesuré à une longueur d'onde de 550 nm avec un instrument de mesure de déphasage de petite surface.

**2.** Verre de lunettes selon la revendication 1, dans lequel le polycarbonate contient un motif carbonate (A) représenté par la formule ci-dessus et un motif carbonate (B-2) dérivé d'au moins un composé sélectionné dans le groupe constitué d'un composé de diol aliphatique et d'un composé de diol alicyclique et présente un rapport molaire (A/(B-2)) du motif (A) sur le motif (B-2) de 15/85 à 95/5.

**3.** Verre de lunettes selon la revendication 1, dans lequel le polycarbonate présente une température de transition vitreuse de 120 à 140 °C.

**4.** Verre de lunettes selon la revendication 1, dans lequel le polycarbonate présente une valeur absolue de coefficient photoélastique de $30 \times 10^{-12}$ $Pa^{-1}$ ou moins ; dans lequel
le coefficient photoélastique est déterminé par la mesure du déphasage sous aucune charge et du déphasage d'une lumière ayant une longueur d'onde de 550 nm sous des charges de 1N, 2N et 3N d'un film ayant une largeur de 1 cm et une longueur de 6 cm avec un ellipsomètre spectroscopique pour calculer (déphasage) x (largeur du film)/(charge).

**5.** Verre de lunettes selon la revendication 1 qui ne se fissure pas avec une bille tombante ayant un poids d'au moins 357 g dans un test à la bille tombante basé sur la norme ANSI Z87.1 à 25 °C.

**6.** Verre de lunettes selon la revendication 1 qui ne se fissure pas avec une bille tombante ayant un poids d'au moins 357 g dans un test à la bille tombante basé sur la norme ANSI Z87.1 à -20 °C.

Fig. 1

[1－A]

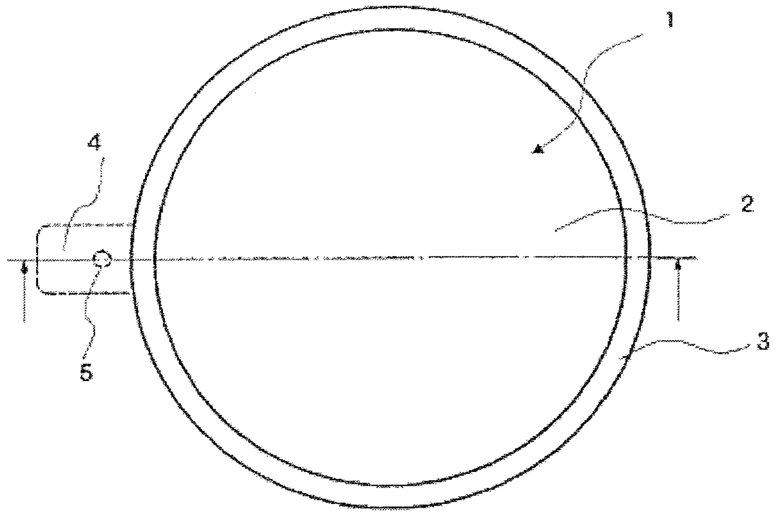


[1－B]

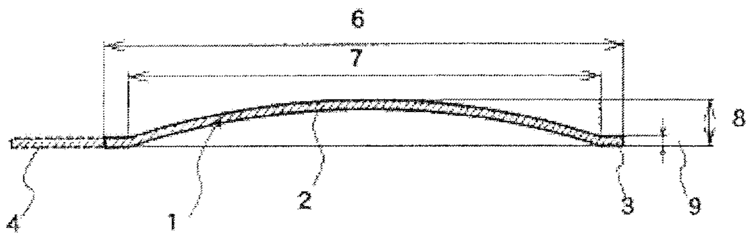

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2840102 A1
- US 2011003101 A1
- EP 2511339 A1
- EP 1640400 A1
- WO 2004111106 A
- JP 2003311908 A
- JP 2009061762 A
- JP 2009144014 A
- JP 2012041471 A
- JP 2003090901 A
- JP 2009062501 A
- JP 2009063976 A
- JP 2010190919 A
- JP 8054501 A
- JP 48056230 A
- JP 49014535 A
- JP 8198985 A